# EUROPÄISCHE PATENTANMELDUNG

(11) **EP 2 316 866 A1**
(43) Veröffentlichungstag der Anmeldung: **04.05.2011**
(21) Anmeldenummer: 09013612.8
(22) Anmeldetag: 29.10.2009
(51) Int. Cl.: C08G 18/08, C08G 18/10, C08G 18/42, C08G 18/79, C09J 175/06, C08G 18/22

(54) **Wässrige Zubereitung auf Basis kristalliner oder semikristalliner Polyurethanpolymere**

(71) Anmelder: Bayer MaterialScience AG, 51368 Leverkusen (DE)
(72) Erfinder: Buechner, Joerg, 51467 Bergisch Gladbach (DE); Achten, Dirk, 51375 Leverkusen (DE); Kraus, Harald, 51371 Leverkusen (DE); Arndt, Wolfgang, 41542 Domagen (DE)

(57) **Zusammenfassung**

Die vorliegende Erfindung betrifft wässrige Zusammensetzungen auf Basis kristalliner oder semikristalliner Polyurethanpolymere, Verfahren zu deren Herstellung sowie Klebstoffsysteme enthaltend diese wässrigen Zusammensetzungen und deren Verwendung.

## Beschreibung

Die vorliegende Erfindung betrifft wässrige Zusammensetzungen auf Basis kristalliner oder semikristalliner Polyurethanpolymere, Verfahren zu deren Herstellung sowie Klebstoffsysteme enthaltend diese wässrigen Zusammensetzungen und deren Verwendung.

Die Verwendung von wässrigen Dispersionsklebstoffen hat in den letzten Jahren aufgrund ihrer guten Umweltverträglichkeit stark an Bedeutung gewonnen. Insbesondere Dispersionsklebstoffe auf Basis von Polyurethanpolymeren mit kristallinen oder teilkristallinen Polyestersegmenten konnten in einer Reihe industrieller Anwendungen lösemittelhaltige Klebstoffe substituieren.

In der Regel werden dabei wässrige Dispersionspolymere unter Mitverwendung von flüssigen, hydrophil modifizierten überwiegend aliphatischen Polyisocyanaten verarbeitet (sog. 2-komponentige Verarbeitung). Bei der 2-komponentigen Verarbeitung kommt es jedoch zwischen dem Polyisocyanat und der Wasserphase der Dispersion zur Bildung von labilen Carbaminsäurederivaten, die in das zugrundeliegende Amin und Kohlendioxid zerfallen. Das freigesetzte Amin reagiert wiederum spontan mit freiem Isocyanat zu Harnstoff ab. Auf diese Weise wird das Isocyanat, das für die Vernetzung der Polymerketten des Dispersionspolymers benötigt wird, durch die Reaktion mit Wasser langsam verbraucht. Die Topfzeiten, das heißt die max. Verarbeitungszeit der 2-komponentigen Klebstoffdispersionen aus einer Polyurethan-Dispersion und einem hydrophil modifizierten überwiegend aliphatischen Isocyanat hängen u.a. von dem pH-Wert der Formulierung ab und liegt typischer Weise bei 1 - 12 Stunden.

Wird der 2-komponentige Dispersionsklebstoff nach Ablauf der Topfzeit verarbeitet, dann reicht die Menge an Isocyanatgruppen nicht aus, um das Polyurethanpolymer vollständig zu vernetzen. Das Ergebnis ist dann eine Klebeverbindung, die nicht die geforderte Qualität hinsichtlich Wärmebeständigkeit erreicht.

Die Reaktivität des Polyisocyanats in der wässrigen Klebstoff-Dispersion sollte also möglichst niedrig sein, um eine lange Verarbeitungszeit zu gewährleisten.

Gleichzeitig besteht jedoch der Wunsch nach einer möglichst hohen Reaktivität d.h. schnellen Vernetzungsreaktion in der Klebstoffschicht nach dem Fügeprozess. Dies ist insbesondere dann von Interesse, wenn die Klebeverbindung möglichst schnell nach dem Fügen weiterverarbeitet werden soll. Darüber hinaus ist es vorteilhaft, die Qualitätsprüfung der Klebeverbindungen möglichst schnell nach dem Fügeprozess durchführen zu können, da auf diese Weise Fehler im Produktionsprozess schneller entdeckt und somit die Ausschussraten bei den industriellen Fertigungsprozessen deutlich verringert werden können.

Bei den kommerziell verfügbaren 2-komponentigen Klebstoff-Dispersionen aus Polyurethan-Dispersionen und hydrophil modifiziertem überwiegend aliphatischem Polyisocyanat muss der Hersteller der Klebeverbindung in der Regel 2 - 3 Tage warten, bis er eine solche Qualitätsprüfung durchführen kann.

Eine Möglichkeit zur Beschleunigung der Vernetzungsreaktion in der Klebstoffschicht liegt in der Lagerung der Klebeverbindung bei erhöhter Temperatur (thermische Härtung). Dies ist jedoch mit hohen Kosten für die Wärmeerzeugung verbunden.

Der vorliegenden Erfindung lag daher die Aufgabe zugrunde, Klebstoffsysteme auf Basis wässriger Zubereitungen zur Verfügung zu stellen, die eine möglichst lange Topfzeit erreichen lassen und gleichzeitig bereits 24 Stunden nach Herstellung der Klebeverbindung und Lagerung der so verklebten Substrate zu Klebeverbindungen mit hoher Festigkeit führen.

Die Aufgabe wird durch die Gegenstände der Erfindung gelöst.

Ein Gegenstand der vorliegenden Erfindung sind wässrige Zusammensetzungen enthaltend
(a) wenigstens ein kristallines oder semikristallines Polyurethanpolymer,
(b) wenigstens ein Polyisocyanat mit aliphatisch gebundenen Isocyanatgruppen,
(c) wenigstens eine oder mehrere Verbindungen von Elementen der 5. und 6. Neben gruppe des Periodensystems, in denen das jeweilige Element eine Oxidationsstufe von mindestens +4 hat,
(d) gegebenenfalls weitere Zusatzstoffe und Hilfsmittel.

Vorzugsweise betragen die Mengen von (a) + (b) von 20 bis 99,9999 Gew.-Teilen, die Menge von (c) von 0,0001 bis 5 Gew.-Teilen und die Menge von (d) von 0 bis 75 Gew.-Teilen, mit der Maßgabe, dass die Summe der Gewichtsteile der Einzelkomponenten (a) bis (d) 100 beträgt.

Besonders bevorzugt betragen die Mengen von (a) + (b) von 40 bis 99,999 Gew.-Teilen, die Menge von (c) von 0, 001 bis 5 Gew.-Teilen und die Menge von (d) von 0 bis 59 Gew.-Teilen, mit der Maßgabe, dass die Summe der Gewichtsteile der Einzelkomponenten (a) bis (d) 100 beträgt.

Vorzugsweise besteht die Summe der Mengen (a) + (b) aus 70 bis 99,5 Gew.-Teilen (a) und 0,5 bis 30 Gew.-Teilen (b), besonders bevorzugt aus 80 bis 98 Gew.-Teilen (a) und 2 bis 20 Gew.-Teilen (b).

Bevorzugt handelt es sich bei den erfindungsgemäßen wässrigen Zubereitungen um Zweikomponentensysteme.

Unter Zweikomponentensystemen im Sinne der vorliegenden Erfindung versteht man Systeme, bei denen die Komponenten a) und b) aufgrund ihrer Reaktivität in getrennten Gefäßen gelagert werden müssen. Die beiden Komponenten werden erst kurz vor Applikation gemischt und reagieren dann im Allgemeinen ohne zusätzliche Aktivierung.

Vorzugsweise weist das kristalline oder semikristalline Polyurethanpolymer a) einen Schmelzpunkt im Bereich zwischen 42°C und 100°C, besonders bevorzugt im Bereich zwischen 42°C und 60°C, ganz besonders bevorzugt im Bereich zwischen 45°C und 52°C, auf.

Vorzugsweise weist das kristalline oder semikristalline Polyurethanpolymer a) eine Glasübergangstemperatur im Bereich zwischen - 100°C und -10 °C, besonders bevorzugt im Bereich zwischen - 60°C und - 40 °C, auf.

Die Bestimmung der Glasübergangstemperatur erfolgt mittels DSC (Differential Scanning Calorimetry) bei einer Heizrate von 10K/min.

Vorzugsweise weist das kristalline oder semikristalline Polyurethanpolymer a) ein gewichtsmittleres Molekulargewicht Mw im Bereich zwischen 20000 und 250000 g/mol, besonders bevorzugt zwischen 30000 und 220000 g/mol, ganz besonders bevorzugt zwischen 50000 und 200000 g/mol, auf.

Die Bestimmung des gewichtsmittleren Molekulargewichts erfolgt mittels Gelpermeationschromatographie (GPC/SEC) mit Dimethylacetamid als mobile Phase.

Kristallin oder semikristallin bedeutet in diesem Zusammenhang, dass bei der DSC der Polyurethanpolymere mit aufsteigender Temperatur ein Maximum durchlaufen wird, das durch das Aufschmelzen regelmäßiger Teilstrukturen im Polymer verursacht wird.

Überraschend wurde gefunden, dass Verbindungen von Elementen der 5. und 6. Nebengruppe des Periodensystems, in denen das jeweilige Element eine Oxidationsstufe von mindestens +4 hat, nur dann bei den Verbindungen a) und den Verbindungen b) eine ausreichende Beschleunigung der Vernetzungsreaktion bewirken, wenn die Verbindungen a) aus kristallinen bzw. teilkristallinen Polymerketten aufgebaut sind.

Die kristallinen bzw. teilkristallinen Polyurethanpolymere a) enthalten daher als Aufbaukomponenten
A) ein oder mehrere di- oder höherfunktionelle Polyesterpolyole mit einem zahlenmittleren Molekulargewicht von 400 bis 5000 Dalton, bevorzugt von 1000 bis 3000 Dalton, besonders bevorzugt von 1500 bis 2500 Dalton,
B) gegebenenfalls eine oder mehrere di- oder höherfunktionellen Polyolkomponente/n mit einem zahlenmittleren Molekulargewicht von 62 bis 399 Dalton,
C) mindestens eine Sulfonat- und/oder Carboxylatgruppen aufweisende Komponente, welche außerdem mindestens eine isocyanatreaktive Hydroxy- und/oder Aminogruppe aufweist und somit zu end- oder seitenständigen Sulfonat- bzw. Carboxylatstruktureinheiten führt,
D) eine oder mehrere Di- oder Polyisocyanatkomponente/n und
E) gegebenenfalls eine oder mehrere Diamino- und/oder Monoaminoverbindungen
F) gegebenenfalls sonstige isocyanatreaktive Verbindungen.

Bevorzugte di- oder höherfunktionelle Polyesterpolyole A) basieren auf linearen Dicarbonsäuren und/oder deren Derivaten, wie Anhydride, Ester oder Säurechloride und aliphatischen oder cycloaliphatischen, linearen oder verzweigten Polyolen. Besonders bevorzugt sind Dicarbonsäuren ausgewählt aus der Gruppe bestehend aus Adipinsäure, Bernsteinsäure, Sebacinsäure und Dodecandisäure, ganz besonders bevorzugt als Komponente A) ist Adipinsäure. Diese werden in Mengen von mindestens 80 mol-%, bevorzugt von 85 bis 100 mol-%, besonders bevorzugt von 90 bis 100 mol-%, bezogen auf die Gesamtmenge aller Carbonsäuren, eingesetzt.

Gegebenenfalls können andere aliphatische, cycloaliphatische oder aromatische Dicarbonsäuren mitverwendet werden. Beispiele für derartige Dicarbonsäuren sind Glutarsäure, Azelainsäure, 1,4-, 1,3- oder 1,2-Cyclohexandicarbonsäure, Terephthalsäure oder Isophthalsäure. Diese werden in Mengen bis maximal 20 mol-%, bevorzugt von 0 bis 15 mol%, besonders bevorzugt von 0 bis 10 mol-%, bezogen auf die Gesamtmenge aller Carbonsäuren, eingesetzt.

Bevorzugte Polyolkomponenten für die Polyester A) werden ausgewählt aus der Gruppe bestehend aus Monoethylenglykol, Propandiol-1,3, Butandiol-1,4, Pentandiol-1,5, Hexandiol-1,6 und Neopentylglykol, besonders bevorzugt als Polyolkomponente sind Butandiol-1,4 und Hexandiol-1,6, ganz besonders bevorzugt ist Butandiol-1,4. Diese werden in Mengen von mindestens 80 mol-%, bevorzugt von 90 bis 100 mol-%, bezogen auf die Gesamtmenge aller Polyole, eingesetzt.

Gegebenenfalls können andere aliphatische oder cycloaliphatische, lineare oder verzweigte Polyole mitverwendet werden. Beispiele solcher Polyole sind Diethylenglykol, Hydroxypivalinsäureneopentylglykol, Cyclohexandimethanol, Pentandiol-1,5, Pentandiol-1,2, Nonandiol-1,9, Trimethylolpropan, Glycerin oder Pentaerythrit. Diese werden in Mengen von maximal 20 mol-%, bevorzugt von 0 bis 10 mol-%, bezogen auf die Gesamtmenge aller Polyole, eingesetzt.

Auch Gemische zweier oder mehrerer solcher Polyester A) kommen in Frage.

Bevorzugt werden Polyester A) auf Basis von Adipinsäure und 1,4-Butandiol oder Adipinsäure und 1,6-Hexandiol oder Adipinsäure und einem Gemisch aus 1,6-Hexandiol und Neopentylglykol eingesetzt.

Als Aufbaukomponente B) geeignet sind di- oder höherfunktionelle Polyolkomponenten mit einem zahlenmittleren Molekulargewicht von 62 bis 399 Dalton wie beispielsweise Polyether, Polyester, Polycarbonate, Polylactone oder Polyamide.

Weitere geeignete Komponenten B) sind die unter A) genannten aliphatischen oder cycloaliphatischen, linearen oder verzweigten Polyole. Bevorzugte Komponenten B) sind Monoethylenglykol, Butandiol-1,4 oder Hexandiol-1,6. Besonders bevorzugt ist Butandiol-1,4.

Geeignete Sulfonat- oder Carboxylatgruppen enthaltende Komponenten C) sind z.B. Diaminoverbindungen bzw. Dihydroxyverbindungen, die zusätzlich Sulfonat- und/oder Carboxylatgruppen tragen, wie beispielsweise die Natrium-, Lithium-, Kalium-, tert.- Amin-Salze der N-(2-Aminoethyl)-2-aminoethansulfonsäure, der -(3-Aminopropyl)-2-aminoethansulfonsäure, der N-(3-Aminoproyl)-3-aminopropansulfonsäure, der N-(2-Aminoethyl)-3-aminopropansulfonsäure, der analogen Carbonsäuren, der Dimethylolpropionsäure, der Dimethylolbuttersäure, der Umsetzungsprodukte im Sinne einer Michaeladdition von 1 Mol Diamin wie z.B. 1,2-Ethandiamin oder Isophorondiamin mit 2 mol Acrylsäure oder Maleinsäure. Bevorzugte Komponenten C) sind N-(2-Aminoethyl)-2-aminoethansulfonat oder Dimethylolpropionat.

Die Säuren werden bevorzugt direkt in Ihrer Salzform als Sulfonat bzw. Carboxylat eingesetzt. Es ist jedoch auch möglich, die zur Salzbildung notwendigen Neutralisationsmittel anteilig oder ganz erst während oder nach der Herstellung der Polyurethane zuzugeben.

Für die Salzbildung besonders gut geeignete und bevorzugte tert. Amine sind z.B. Triethylamin, Dimethylcyclohexylamin, Ethyldüsopropylamin.

Es können auch andere Amine zur Salzbildung eingesetzt werden, wie z.B. Ammoniak, Diethanolamin, Triethanolamin, Dimethylethanolamin, Methydiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Es ist auch möglich andere Neutralisationsmittel wie z.B. Natrium-, Kalium-, Lithium-, Calcium-Hydroxid für Neutralisationszwecke einzusetzen.

Als Aufbaukomponenten D) sind bevorzugt organische Verbindungen geeignet, die mindestens zwei freie Isocyanatgruppen pro Molekül aufweisen. Bevorzugt werden Diisocyanate Y(NCO)₂ eingesetzt, wobei Y für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoff-Atomen, einen zweiwertigen aromatischen Kohlenwasserstoffrest mit 6 bis 15 Kohlenstoff-Atomen oder einen zweiwertigen araliphatischen Kohlenwasserstoffrest mit 7 bis 15 Kohlenstoffatomen steht. Besonders bevorzugt werden die Diisocyanate ausgewählt aus der Gruppe bestehend aus Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan, 4,4'-Diisocyanato-dicyclohexylpropan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat und p-Isopropylidendiisocyanat sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Ganz besonders bevorzugt werden Diisocyanate D) ausgewählt aus der Gruppe bestehend aus Hexamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan und 4,4'-Diisocyanato-dicyclohexylpropan-(2,2) sowie aus diesen Verbindungen bestehende Gemische.

Ebenfalls noch weiter bevorzugt sind als Komponente D) 2,4-Diisocyanatotoluol und 2,6-Diisocyanatotoluol und deren Gemische.

Noch weiter bevorzugte Aufbaukomponenten D) sind Gemische aus Hexamethylendiisocyanat und 1-Isocyanato-3,3,5-trimethyl-5-isocyanatomethyl-cyclohexan.

Als Aufbaukomponente E) kommen primäre und/oder sekundären Monoaminoverbindungen und/oder primäre und/oder sekundäre Diaminoverbindungen in Frage.

Bevorzugt als Komponente E) sind aliphatische und/oder alicyclische primäre und/oder sekundäre Monoamine wie Ethylamin, Diethylamin, die isomeren Propyl- und Butylamine, höhere linear-aliphatische Monoamine und cycloaliphatische Monoamine wie Cyclohexylamin. Weitere Beispiele für die Komponente E) sind Aminoalkohole, d.h. Verbindungen, die in einem Molekül Amino- und Hydroxylgruppen enthalten, wie z.B. Ethanolamin, N-Methylethanolamin, Diethanolamin und 2-Propanolamin. Selbstverständlich können auch Mischungen mehrerer Monoaminoverbindungen eingesetzt werden.

Besonders bevorzugte Monoaminoverbindungen werden ausgewählt aus der Gruppe bestehend aus Diethylamin, Ethanolamin und Diethanolamin. Ganz besonders bevorzugt ist Diethanolamin.

Besonders bevorzugte Diaminoverbindungen werden ausgewählt aus der Gruppe bestehend aus 1,2-Ethandiamin, 1,6-Hexamethylendiamin, 1-Amino-3,3,5-trimethyl-5-aminomethylcyclohexan (Isophorondiamin), Piperazin 1,4-Diaminocyclohexan und Bis-(4-aminocyclohexyl)-methan. Weiterhin besonders bevorzugte Diaminoverbindungen sind Aminoverbindungen wie beispielsweise 1,3-Diamino-2-propanol, N-(2-Hydroxyethyl)-ethylendiamin und N,N-Bis(2-Hydroxyethyl)ethylendiamin. Weiterhin kommen als Komponente E) Adipinsäuredihydrazid, Hydrazin bzw. Hydrazinhydrat in Frage. Auch Polyamine wie Diethylentriamin können anstelle einer Diaminoverbindung als Komponente E) eingesetzt werden.

Bevorzugt als gegebenenfalls mit zu verwendende Komponenten F) sind z.B. aliphatische, cycloaliphatische oder aromatische Monoalkohole mit 2 bis 22 C-Atomen wie Ethanol, Butanol, Hexanol, Cyclohexanol, Isobutanol, Benzylalkohol, Stearylalkohol, 2-Ethylethanol, Cyclohexanol; hydrophilierend wirkende, mono- oder difunktionelle Polyether auf Basis von auf Alkoholen oder Aminen gestartete Ethylenoxid-Polymeren oder Ethylenoxid/Propylenoxid-Copolymeren, wie z.B. Polyether LB 25 ( Bayer Material Science AG; Deutschland)oder MPEG 750: Methoxypolyethylenglykol, Molekulargewicht 750 g/Mol (z.B. Pluriol® 750, BASF AG, Deutschland); für Isocyanatgruppen gebräuchliche, unter erhöhten Temperaturen wieder abspaltbare Blockierungsmittel wie z.B. Butanonoxim, Dimethylpyrazol, Caprolactam, Malonester, Triazol, Dimethyltriazol, tert.-Butyl-benzylamin, Cyclopentanoncarboxyethylester; ungesättigte, für Polymerisationsreaktionen zugängliche Gruppen enthaltende Verbindungen wie z.B. Hydroxyethylacrylat, Hydroxyethylmethacrylat, Hydroxybutylacrylat, Hydroxybutylmethacrylat, Hydroxypropylacrylat, Hydroxypropylmethacrylat, Pentaerythrittrisacylat, hydroxyfunktionelle Umsetzungsprodukte aus Monoepoxiden, Bisepoxiden und/oder Polyepoxiden mit Acrylsäure oder Methacrylsäure.

Komponenten F) können in dem erfindungsgemäßen Polyurethan in Mengen von 0 bis 20, bevorzugt von 0 bis 10 Gew.-% enthalten sein.

Der Gehalt an ionischen Gruppen beträgt zwischen 2 und 600 mmol pro kg Feststoff, bevorzugt zwischen 10 und 400 mmol, besonders bevorzugt zwischen 40 und 300 mmol pro kg Feststoff.

Gegenstand der vorliegenden Erfindung ist weiterhin ein Verfahren zur Herstellung der erfindungsgemäßen wässrigen Polyurethan- bzw. Polyurethan-Harnstoff-Dispersionen, **dadurch gekennzeichnet, dass** Komponenten A), gegebenenfalls B), C), D) und gegebenenfalls F) in einer ein- oder mehrstufigen Reaktion zu einen isocyanatfunktionellen Prepolymeren umgesetzt werden, welches anschließend mit gegebenenfalls Komponente E), C) und gegebenenfalls F) in einer ein- oder zweistufigen Reaktion umgesetzt wird und dann in oder mit Wasser dispergiert wird, wobei ggf. mit verwendetes Lösemittel während oder nach der Dispergierung destillativ anteilig oder ganz entfernt werden kann.

Die Herstellung der erfindungsgemäßen wässrigen Polyurethan- bzw. Polyurethan-Harnstoff-Dispersonen kann in einer oder mehreren Stufen in homogener, oder bei mehrstufiger Umsetzung, teilweise in disperser Phase durchgeführt werden. Nach vollständig oder teilweise durchgeführter Polyaddition erfolgt ein Dispergier-, Emulgier- oder Lösungsschritt. Im Anschluss erfolgt gegebenenfalls eine weitere Polyaddition oder Modifikation in disperser Phase. Zur Herstellung können sämtliche, aus dem Stand der Technik bekannte Verfahren wie Emulgator-Scherkraft-, Aceton-, Prepolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, S. 1671-1682). Bevorzugt sind das Schmelz-Emulgier-, Prepolymer-Misch- und das Aceton-Verfahren. Besonders bevorzugt ist das Aceton-Verfahren.

Grundsätzlich ist es möglich, alle hydroxyfunktionellen Komponenten einzuwiegen, dann alle isocyanatfunktionellen Komponenten zuzugeben und zu einem isocyanatfunktionellen Polyurethan umzusetzen, welches dann mit den aminofunktionellen Komponenten zur Reaktion gebracht wird. Auch eine umgekehrte Herstellung, Vorlegen der Isocyanatkomponente, Zugabe der hydroxyfunktionellen Komponenten, Umsetzung zum Polyurethan und dann Umsetzung mit den aminofunktionellen Komponenten zum Endprodukt ist möglich.

Üblicherweise werden die hydroxyfunktionellen Komponenten A), gegebenenfalls B), ggf. C) und gegebenenfalls F) zur Herstellung eines Polyurethan-Prepolymers im Reaktor ganz oder teilweise vorgelegt, gegebenenfalls mit einem mit Wasser mischbaren aber gegenüber Isocyanatgruppen inerten Lösungsmittel verdünnt und dann homogenisiert. Anschließend wird bei Raumtemperatur bis 120°C die Komponente D) zudosiert und ein isocyanatfunktionelles Polyurethan hergestellt. Diese Umsetzung kann einstufig und auch mehrstufig erfolgen. Eine mehrstufige Umsetzung kann z.B. in der Art erfolgen, dass eine Komponente A) vorgelegt wird und nach Umsetzung mit der isocyanatfunktionellen Komponente D) eine zweite Komponente B) hinzu gegeben wird, die dann mit einen Teil der noch vorhandenen Isocyanatgruppen abregieren kann.

Geeignete Lösungsmittel sind z.B. Aceton, Methylisobutylketon, Butanon, Tetrahydrofuran, Dioxan, Acetonitril, Dipropylenglykoldimethylether und 1-Methyl-2-pyrrolidon, die nicht nur zu Beginn der Herstellung, sondern gegebenenfalls in Teilen auch später zugegeben werden können. Bevorzugt sind Aceton und Butanon. Es ist möglich, die Reaktion unter Normaldruck oder erhöhtem Druck durchzuführen.

Zur Herstellung des Prepolymers werden die Einsatzmengen der hydroxy- und ggf. aminofunktionellen Komponenten so bemessen, dass eine Isocyanat-Kennzahl von 1,05 bis 2,5, bevorzugt von 1,15 bis 1,85 resultiert.

Die weitere Umsetzung, die sogenannte Kettenverlängerung, des isocyanatfunktionellen Prepolymeren mit weiteren hydroxy- und/oder aminofunktionellen, bevorzugt nur mit aminofunktionellen Komponenten E), und ggf. C) und gegebenenfalls F) erfolgt derart, dass ein Umsetzungsgrad von 25 bis 150, bevorzugt von 40 bis 85 % Hydroxyl- und/oder Aminogruppen bezogen auf 100% Isocyanatgruppen gewählt wird. Das Verfahren wird so ausgeführt, dass die Komponente C) zu Beginn und/oder zum Ende zugegeben wird.

Bei Umsetzungsgraden über 100%, die möglich aber weniger bevorzugt sind, ist es angebracht, zunächst alle im Sinne der Isocyanatadditionsreaktion monofunktionellen Komponenten mit dem Prepolymeren umzusetzen und dann die di- oder höherfunktionellen Kettenverlängerungskomponenten einzusetzen, um einen möglichst vollständigen Einbau aller Kettenverlängerungsmoleküle zu erhalten.

Der Umsetzungsgrad wird üblicherweise durch Verfolgung des NCO-Gehalts der Reaktionsmischung überwacht. Dazu können sowohl spektroskopische Messungen, z.B. Infrarotoder Nah-Infrarot-Spektren, Bestimmungen des Brechungsindex als auch chemische Analysen, wie Titrationen von entnommenen Proben vorgenommen werden.

Zur Beschleunigung der Isocyanatadditionsreaktion können übliche Katalysatoren, wie sie zur Beschleunigung der NCO-OH-Reaktion dem Fachmann bekannt sind, eingesetzt werden. Beispiele sind Triethylamin, 1,4-Diazabicyclo-[2,2,2]-octan, Dibutylzinnoxid, Zinndioktoat oder Dibutylzinndilaurat, Zinn-bis-(2-ethylhexanoat) oder andere metallorganische Verbindungen.

Die Kettenverlängerung des isocyanatfunktionellen Prepolymeren mit der Komponente C) und gegebenenfalls E) und gegebenenfalls F) kann vor dem Dispergieren, während des Dispergierens oder nach dem Dispergieren durchgeführt werden. Bevorzugt erfolgt die Kettenverlängerung vor der Dispergierung. Wird Komponenten C) als Kettenverlängerungskomponente eingesetzt, so ist eine Kettenverlängerung mit dieser Komponente vor dem Dispergierschritt zwingend.

Die Kettenverlängerung wird üblicherweise bei Temperaturen von 10 bis 100°C, bevorzugt von 25 bis 60°C durchgeführt.

Der Begriff Kettenverlängerung im Sinne der vorliegenden Erfindung beinhaltet auch die Reaktionen ggf. monofunktioneller Komponenten E) oder auch F) die infolge ihrer Monofunktionalität als Kettenabbrecher fungieren und somit nicht zu einer Zu-, sondern zu einer Begrenzung des Molekulargewichtes führen.

Die Komponenten der Kettenverlängerung können mit organischen Lösungsmitteln und/oder mit Wasser verdünnt dem Reaktionsgemisch zugegeben werden. Die Zugabe kann nacheinander in beliebiger Reihenfolge oder gleichzeitig durch Zugabe einer Mischung erfolgen.

Zwecks Herstellung der Polyurethan-Dispersion wird das Prepolymer, gegebenenfalls unter starker Scherung, wie z.B. starkem Rühren, entweder in das Dispergierwasser eingetragen oder man rührt umgekehrt das Dispergierwasser zu den Prepolymeren. Anschließend kann dann, falls noch nicht in der homogenen Phase geschehen, die Kettenverlängerung erfolgen.

Während und/oder nach der Dispergierung wird das gegebenenfalls eingesetzte organische Lösungsmittel, beispielsweise Aceton, abdestilliert.

Ein bevorzugtes Herstellverfahren ist das im Folgenden beschriebene:

Die OH-funktionellen Komponenten A), gegebenenfalls B), ggf. C) und gegebenenfalls F) sowie gegebenenfalls Lösemittel werden vorgelegt und auf 20 bis 100°C aufgeheizt, Unter Rühren wird Komponente D) so schnell wie möglich zudosiert. Unter Ausnutzung der Exothermie wird die Reaktionsmischung solange bei 40 bis 150°C gerührt, bis der theoretische Isocyanatgehalt erreicht, bzw. leicht unterschritten ist. Dabei kann ggf. Katalysator zugesetzt werden. Anschließend wird durch Zugabe von Lösemittel auf Feststoffgehalte von 25 bis 95, bevorzugt von 30 bis 80 Gew. % verdünnt, und dann die Kettenverlängerung durch Zugabe der mit Wasser und/oder Lösemittel verdünnten aminofunktionellen Komponenten E), ggf. C), und/oder gegebenenfalls F) bei 30 bis 120°C durchgeführt. Nach 2 bis 60 Minuten Reaktionszeit wird durch Zugabe von destilliertem Wasser bzw. durch Überführen in vorgelegtes destilliertes Wasser dispergiert und das eingesetzte Lösemittel während oder nach dem Dispergierschritt teilweise oder vollständig abdestilliert. Das Verfahren wird so ausgeführt, dass die Komponente C) zu Beginn und/oder zum Ende zugegeben wird.

Die Umwandlung der Sulfon- bzw. Carbonsäuren in Sulfonate bzw. Carboxylate kann vor, während oder nach der Kettenverlängerung erfolgen. Außerdem kann sie vor oder während der Dispergierung erfolgen

Bei der Polyisocyanatkomponente (b) handelt es sich um beliebige organische Polyisocyanate mit aliphatisch gebundenen, freien Isocyanatgruppen, die bei Raumtemperatur flüssig sind oder zu diesem Zweck mit Lösungsmitteln verdünnt sind. Die Polyisocyanatkomponente (b) weist bei 23°C eine Viskosität von 10 bis 15000, vorzugsweise 10 bis 5000 mPa.s auf. Die Bestimmung der Viskosität erfolgt mit dem Rotationsviskosimeter VT-500 der Fa. Haake nach DIN 53019.

Besonders bevorzugt handelt es sich bei der Polyisocyanatkomponente (b) um Polyisocyanate oder Polyisocyanatgemische mit ausschließlich aliphatisch gebundenen Isocyanatgruppen einer zwischen 2,0 und 5,0 liegenden (mittleren) NCO-Funktionalität und einer Viskosität bei 23°C von 10 bis 2000 mPa.s.

Besonders bevorzugt als Komponente b) sind Polyisocyanate ausgewählt aus der Gruppe bestehend aus Isophorondiisocyanat (Desmodur I), Hexamethylendiisocyanat (Desmodur H), Bis-(4-isocyanatocyclohexyl)-methan (Desmodur W),ω,ω'-Diisocyanato-1,3-dimethylcyclohexan (H6XDI), Triisocyanatononan und XDI (1,3-Bis (isocyanatomethyl)benzol).

Die Komponente b) kann auch als Mischung mit aromatischen Polyisocyanaten wie Touluol-2,4-diisocyanat eingesetzt werden.

Die genannten Diisocyanate können gegebenenfalls als solche verwendet werden, in der Regel finden jedoch Derivate der Diisocyanate Verwendung. Als Derivate geeignet sind Polyisocyanate enthaltend Biuret-, Isocyanurat-, Uretdion-, Urethan-, Iminooxadiazindion-, Oxadiazintrione-, Carbodiimid-, Acylharnstoff und Allophanatgruppen.

Die Polyisocyanatkomponente (b) kann ggf. hydrophil modifiziert sein. Wasserlösliche bzw. - dispergierbare Polyisocyanate sind z.B. durch Modifikation mit Carboxylat-, Sulfonatund/oder Polyethylenoxidgruppen und/oder Polyethylenoxid/Polypropylenoxidgruppen erhältlich.

Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielweise in der EP-A 0 540 985, S. 3, Z 55 - S. 4 Z. 5 beschrieben. Gut geeignet sind auch die in der EP-A-0 959 087, S. 3 Z. 39-51 beschriebenen Allophanatgrupen enthaltenden Polyisocyanate, die durch Umsetzung monomerenarmer Polyisocyanate mit Polyethylenoxidpolyetheralkoholen unter Allophanatisierungsbedingungen hergestellt werden.. Ebenso möglich ist die externe Hydrophilierung durch Zusatz von Emulgatoren.

Der NCO-Gehalt der verwendeten Polyisocyanatkomponente (b) kann z.B. bei sogenannten Polyether-Allophanaten (Hydrophilierung mittels eines Polyethers) von 5 - 25 Gew.-% reichen. Bei einer Hydrophilierung mit Sulfonsäuregruppen können NCO-Gehalte von 4 - 26 Gew.-% erreicht werden, wobei diese Zahlen nur beispielhaft zu verstehen sind.

Die eingesetzten Isocyanatkomponenten können auch teilweise, z.B. bis zu einem Drittel der vorhandenen Isocyanatgruppen mit gegenüber Isocyanaten reaktiven Komponenten blockiert sein. In diesem Fall kann es in einem späteren Schritt zu Reaktion der blockierten Isocyanatkomponente mit weiterem Polyol kommen, um eine weitere Vernetzung herbeizuführen.

Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Cyclohexanonoxim, Lactame wie ε-Caprolactam, Phenole, Amine wie Diisopropylamin oder Dibutylamin, Dimethylpyrazol oder Triazol sowie Malonsäuredimethylester, Malonsäurediethylester oder Malonsäuredibutylester.

Überraschend wurde gefunden, dass Verbindungen von Elementen der 5. und 6. Nebengruppe des Periodensystems, in denen das jeweilige Element eine Oxidationsstufe von mindestens +4 hat, die Reaktion zwischen den Verbindungen a) und b) so beschleunigen, dass unter Beibehaltung der langen Topfzeit von > 8 Stunden die Vernetzungsreaktion zwischen den Verbindungen a) und b) bereits nach 24 Stunden Raumtemperaturlagerung abgeschlossen ist.

Bevorzugt werden als Verbindungen (c) Verbindungen der Elemente ausgewählt aus der Gruppe bestehend aus Vanadium, Tantal, Molybdän, Wolfram und Tellur eingesetzt.

Besonders bevorzugt werden als Verbindungen (c) Verbindungen ausgewählt aus der Gruppe bestehend aus Molybdänsäure, Lithiummolybdat, Natriummolybdat, Kaliummolybdat, Rubidiummolydat, Cäsiummolybdat, Tetramethylammoniummolybdat, Tetraethylammoniummolybdat, Molybdänylacetylacetonat,

Molybdändioxidtetramethylheptadionat, Natriumwolframat, Kaliumtellurit K₂TeO₃, Lithiumorthovanadat, Lithiummetavanadat und seine Modifikationen, Natriumorthovanadat, Natriummetavanadat sowie Ammoniumheptamolybdat eingesetzt.

Ganz besonders bevorzugt sind Verbindungen c) ausgewählt aus der Gruppe bestsehend aus Lithiummolybdat, Natriummolybdat, Kaliummolybdat, Rubidiummolybdat, Cäsiummolybdat und anderen Molybdat-Salze von ein, zwei oder dreiwertigen Kationen sowie Molybdat-Salze, die über ein organisches Kation verfügen wie z.B. Ammonium, Tetramethylammonium, Tetraethylphosphonium etc.

Noch weiter bevorzugt sind Verbindungen c) ausgewählt aus der Gruppe bestehend aus Lithiummolybdat, Natriummolybdat und Molybdänsäure.

Die einzusetzenden Katalysatormengen für die Verbindungen c) liegen sehr niedrig. Generell kann mit einer Wirkstoffmenge von 1 bis 50000 ppm gearbeitet werden, bevorzugt ist ein Bereich von 1 bis 30000 ppm, bezogen auf alle Komponenten der wässrigen Zusammensetzung. Die Wirksamkeit des Katalysators ist unabhängig von der Art seiner Zugabe. Somit kann er direkt ins zugesetzte Wasser gegeben werden. Alternativ kann er auch in die Komponenten (a) und/oder (b) eingearbeitet werden.

Die Dispersionen haben bevorzugt einen Festkörpergehalt von 10 bis 60 Gew.-%, besonders bevorzugt von 25 bis 60 Gew.-% und ganz besonders bevorzugt 35 bis 55 Gew.-%.

In Abhängigkeit vom Molekulargewicht der Komponente (a) und ihrem Gehalt an anionischen Gruppen bzw. an freien Säuregruppen, insbesondere Sulfonat- und / oder Carboxylgruppen handelt es sich bei den wässrigen, die Polymerisate enthaltenden Systemen um echte Dispersionen, kolloiddisperse oder molekulardisperse Dispersionen, im allgemeinen jedoch um sogenannte "Teildispersionen", d.h. um wässrige Systeme, die zum Teil molekulardispers und zum Teil kolloiddispers sind.

Vorzugsweise weist die erfindungsgemäße wässrige Zubereitung eine Viskosität im Bereich zwischen 10 mPas und 20000 mPas, besonders bevorzugt im Bereich zwischen 1000 mPas und 5000 mPas, ganz besonders bevorzugt im Bereich zwischen 1500 mPas und 2500 mPas, auf.

Vorzugsweise weist die erfindungsgemäße wässrige Zubereitung ein pH-Wert im Bereich zwischen 5 und 12, besonders bevorzugt im Bereich zwischen 6 und 11, ganz besonders bevorzugt im Bereich zwischen 6 und 9, auf.

Das Verhältnis von Isocyanatgruppen zu Hydroxylgruppen (NCO-OH Verhältnis) der Komponente b) zur Komponente a) kann einen weiten Bereich umfassen. Bevorzugt werden die Isocyanatgruppen im Überschuss zugegeben.

Ein weiterer Gegenstand der Erfindung ist auch ein Verfahren zur Herstellung der erfindungsgemäßen wässrigen Zubereitungen, wobei die Reihenfolge der Zugabe der Komponenten des Klebstoffsystems und der Hilfsstoffe (a) bis (d) beliebig variiert werden kann.

Ein weiterer Gegenstand der vorliegenden Erfindung sind Klebstoffsysteme enthaltend eine erfindungsgemäße wässrige Zusammensetzung.

Die erfindungsgemäßen Klebstoffsysteme können alleine oder mit den in der Beschichtungsund Klebstofftechnologie bekannten Bindemitteln, Hilfsstoffen und Zugschlagstoffen, insbesondere Emulgatoren oder Lichtschutzmitteln wie UV-Absorbern oder sterisch gehinderte Aminen (HALS), weiterhin Antioxidantien, Füllstoffen oder Hilfsmitteln, z.B. Antiabsetzmitteln, Entschäumungs- und/oder Netzmitteln, Verlaufmitteln, Reaktiv-Verdünnem, Weichmachern, Katalysatoren, Hilfslösemitteln und/oder Verdickern und Additiven, wie beispielsweise Pigmente, Farbstoffe oder Mattierungsmittel eingesetzt werden. Auch klebrig machende Harze ("Tackifier") können zugegeben werden. Unter klebrig machenden Harzen sind alle natürlichen oder synthetischen Harze oder Polymere zu verstehen, die als Additive den Tack, das heißt die Eigenschaft, nach kurzem, leichten Andruck fest auf Oberflächen zu haften, erhöhen. Um das zu erreichen, müssen Klebharze unter anderem eine ausreichende Verträglichkeit mit den Polymeren besitzen. Tackifier selbst brauchen keinen Tack zu haben. Breit eingesetzte Tackifier sind unter anderem Terpen-Oligomere, aliphatische petrochemische Harze und Kolophoniumharze.

Die Additive können den erfindungsgemäßen Klebstoffsystemen unmittelbar vor der Verarbeitung zugegeben werden. Es ist aber auch möglich, zumindest einen Teil der Additive vor, während oder nach der Dispergierung des Bindemittels zuzugeben.

Die erfindungsgemäßen Klebstoffsysteme eigenen sich zur Verklebung beliebiger Substrate wie z.B. Papier, Pappe, Holz, Textilien, Metall, Leder oder mineralischer Materialen. Außerdem eignen sich die erfindungsgemäßen Klebstoffzusammensetzungen zum Kleben von Gummimaterialien wie z.B. Natur- und Synthesekautschuken, verschiedenen Kunststoffen wie Polyurethanen, Polyvinylacetat oder Polyvinylchlorid, und thermoplastischen Polymeren wie Polycarbonat, Polyamid, Acrylbutadienstryol und deren Mischungen.

Besonders bevorzugt eignen sich die erfindungsgemäßen Klebstoffsysteme zur Verklebung von synthetischen oder natürlichen Materialien wie sie z.B. bei der Herstellung von Schuhen insbesondere Sportschuhen zum Einsatz kommen. Solche Materialien sind z.B. Leder, EVA-Sohlen (geprimert und ungeprimert), Gummi, Polyurethane, Polyamide und Polyetherpolyamide (Pebax).

Im Folgenden wird anhand von Beispielen die Erfindung verdeutlicht.

### Beispiele:

Dispercoll^{®} U 54, Polyurethandispersion der Bayer MaterialScience AG, 51368 Leverkusen; Feststoffgehalt ca. 50 Gew.%.; Isocyanat-reaktives Polymer aus linearen Polyurethanketten auf Basis eines Adipinsäure / Butandiol-Polyesters mit HDI / IPDI als Isocyanatkomponente. Die Glasübergangstemperatur des Dispersionspolymers liegt bei - 50°C. Die Messung erfolgt mittels DSC. Gemäß DSC-Messung liegt die Dekristallisationstemperatur bei ca. 48°C.

Dispercoll® U 42, Polyurethandispersion der Bayer MaterialScience AG, 51368 Leverkusen; Feststoffgehalt ca. 50 Gew.%.; Isocyanat-reaktives Polymer aus linearen Polyurethanketten auf Basis eines Phthalsäure / Hexandiol-Polyesters mit HDI als Isocyanatkomponente. Die Glasübergangstemperatur des Dispersionspolymers liegt bei ca. - 10°C. Die Messung erfolgt mittels DSC.

Beschreibung der hydrophil modifizierten Polyisocyanate:
Desmodur DN, hydrophil modifiziertes Vernetzerisocyanate auf Basis HDI-Trimer. Isocyanatgehalt ca. 20%
Desmodur D XP 2725, hydrophil modifiziertes Vernetzerisocyanat auf Basis HDI-Trimer / TDI-Trimer, Wirkstoffgehalt = 85%, Isocyanatgehalt ca. 15,5%
Tanemul FD-liquid der Fa. Tanatex Chemicals B.V. : Lösung von 13 - 17 Gew.-% Stearylalkoholpolyglykolether in Wasser CAS-Nr.: 68439-49-6

### Wässrige Zubereitungen:

1. 100 Gew. Teile Dispercoll U 54
   5 Gew. Teile Desmodur DN
2. 100 Gew. Teile Dispercoll U 54
   3 Gew. Teile 10% Lithiummolybdat in Tanemul FD-liquid.
   5 Gew. Teile Desmodur DN
3. 100 Gew. Teile Dispercoll U 54
   5 Gew. Teile Desmodur D XP 2725
4. 100 Gew. Teile Dispercoll U 54
   3 Gew. Teile 10% Lithiummolybdat in Tanemul FD-liquid
   5 Gew. Teile Desmodur D XP 2725
5. 100 Gew. Teile Dispercoll U 42
   3 Gew. Teile 10% Lithiummolybdat in Tanemul FD-liquid.
   5 Gew. Teile Desmodur DN
6. 100 Gew. Teile Dispercoll U 42
   3 Gew. Teile 10% Lithiummolybdat in Tanemul FD-liquid
   5 Gew. Teile Desmodur D XP 2725

### Untersuchungen

### Prüfmittel:

Buchenholzprüfkörper 5 cm x 14 cm
PCV-Folien Typ Benelite (5 cm breit)

### Probenherstellung:

Die Klebstoff-Dispersion wird mittels eines 200µm-Rillenrakels auf den Buchenholzprüfkörper (Fläche 5 cm x 8 cm) aufgestrichen. Nach 1 Stunde im Normklima (23°C / 50% relative Luftfeuchtigkeit) trocknet die Klebstoffschicht vollständig ab.

Danach wird die PVC-Folie auf den mit klebstoffbeschichteten Buchenholzprüfkörper aufgelegt und in einer beheizten Membranpresse eingelegt. Bei 63°C bzw. 103°C Heizplattentemperatur wird der Verbund bei 4 bar Druck die PVC-Folie über 10 sec. verpresst. Die Temperatur in der Klebstoffschicht steigt dabei auf max. 55°C bzw. max. 77°C an. Der Verbund wird anschließend aus der Membranpresse entnommen und im Normklima über 24 Stunden gelagert.

### Prüfung auf Wärmebeständigkeit

Der Verbund wird in einen auf 70°C temperierten Wärmeschrank eingehängt. An die PVC-Folie wird ein Gewicht von 2,5 kg so angehängt das die Folie im 180° Winkel von der Buchenholzoberfläche abschälen kann. Nach einer Stunde wird der Prüfkörper aus dem Wärmeschrank entnommen und die abgeschälte Strecke in mm bestimmt.

### Ergebnisse:

In der folgenden Tabelle sind die abgeschälten Strecken [mm] aufgeführt. Bei Werte ≥ 80 schält die Folie innerhalb der Prüfdauer von 60 min. vollständig ab.

Die Werte sind Mittelwert aus jeweils zwei Einzelmessungen

| Nr. | max. Temperatur in der Klebstoffschicht 55°C | max. Temperatur in der Klebstoffschicht 77°C | |
|---|---|---|---|
| 1 | > 80 | > 80 | Vergleich |
| 2 | <5 | <5 | erfindungsgemäß |
| 3 | > 80 | > 80 | Vergleich |
| 4 | <5 | <5 | erfindungsgemäß |
| 5 | > 80 | 60 | Vergleich |
| 6 | > 80 | 49 | Vergleich |

| | | | |
|---|---|---|---|
| (alle Angaben in mm abgeschälte Strecke) | | | |

Die Werte zeigen die sehr schnelle Vernetzung der erfindungsgemäßen Klebstoff-Dispersion mit dem teilkristallinen Polyurethandispersionspolymer. Die Vernetzungsreaktion ist nach 24 Stunden abgeschlossen.

Die Vergleichsuntersuchungen mit dem Dispersionsklebstoff ohne Lithiummolybdat (Nr. 1 und 3) zeigen nach 24 Stunden noch keine ausreichende Vernetzungsreaktion.

Der Vergleich mit dem amorphen Polyurethan-Dispersionspolymer (Vergleichsbeispiel 5-6) belegt, dass die Beschleunigung der Reaktion zwischen den hydrophil modifizierten Polyisocyanaten und dem amorphen Polyurethanpolymer mit dem Lithiummolybdat nicht zu der vollständigen Vernetzung des Polymers innerhalb von 24 Stunden nach der Herstellung der Klebeverbindung führt.

## Patentansprüche

1. Wässrige Zusammensetzungen enthaltend
(a) wenigstens ein kristallines oder semikristallines Polyurethanpolymer,
(b) wenigstens ein Polyisocyanat mit aliphatisch gebundenen Isocyanatgruppen,
(c) wenigstens eine oder mehrere Verbindungen von Elementen der 5. und 6. Nebengruppe des Periodensystems, in denen das jeweilige Element eine Oxidationsstufe von mindestens +4 hat,
(d) gegebenenfalls weitere Zusatzstoffe und Hilfsmittel.

2. Wässrige Zusammensetzung nach Anspruch 1, **dadurch gekennzeichnet, dass** das kristalline oder semikristalline Polyurethanpolymer einen Schmelzpunkt im Bereich zwischen 45 °C und 100 °C aufweist.

3. Wässrige Zusammensetzung nach Anspruch 1, **dadurch gekennzeichnet, dass** das kristalline oder semikristalline Polyurethanpolymer eine Glasübergangstemperatur im Bereich zwischen -100 °C und -10 °C aufweist.

4. Wässrige Zusammensetzung nach Anspruch 1, **dadurch gekennzeichnet, dass** das kristalline oder semikristalline Polyurethanpolymer ein gewichtsmittleres Molekulargewicht Mw im Bereich zwischen 20000 g/mol und 250000 g/mol aufweist.

5. Wässrige Zusammensetzungen nach Anspruch 1, **dadurch gekennzeichnet, dass** das kristalline oder semikristalline Polyurethanpolymer als Komponenten
A) ein oder mehrere di- oder höherfunktionelle Polyesterpolyole mit einem zahlenmittleren Molekulargewicht von 400
bis 5000 Dalton,
B) gegebenenfalls eine oder mehrere di- oder höherfunktionellen Polyolkomponente/n mit einem zahlenmittleren Molekulargewicht von 62 bis 399 Dalton,
C) mindestens eine Sulfonat- und/oder Carboxylatgruppen aufweisende Komponente, welche außerdem mindestens eine isocyanatreaktive Hydroxy- und/oder Aminogruppe aufweist und somit zu end- oder seitenständigen Sulfonat- bzw. Carboxylatstruktureinheiten führt,
D) eine oder mehrere Di- oder Polyisocyanatkomponente/n und
E) gegebenenfalls eine oder mehrere Diamino- und/oder Monoaminoverbindungen
F) gegebenenfalls sonstige isocyanatreaktive Verbindungen enthält.

6. Wässrige Zusammensetzung nach Anspruch 1, **dadurch gekennzeichnet, dass** die Komponente b) ausgewählt wird aus der Gruppe bestehend aus Isophorondiisocyanat, Hexamethylendiisocyanat, Bis-(4-isocyanatocyclohexyl)-methan, ω,ω'-Diisocyanato-1,3-dimethylcyclohexan, Triisocyanatononan und 1,3-Bis(isocyanatomethyl)benzol.

7. Wässrige Zusammensetzung nach Anspruch 1, **dadurch gekennzeichnet, dass** als Komponente c) Verbindungen von Elementen ausgewählt aus der Gruppe bestehend aus Vanadium, Tantal, Molybdän, Wolfram und Tellur eingesetzt werden.

8. Wässrige Zusammensetzung nach Anspruch 7, **dadurch gekennzeichnet, dass** als Komponente (c) Verbindungen ausgewählt aus der Gruppe bestehend aus Molybdänsäure, Lithiummolybdat, Natriummolybdat, Kaliummolybdat, Rubidiummolydat, Cäsiummolybdat, Tetramethylammoniummolybdat, Tetraethylammoniummolybdat, Molybdänylacetylacetonat, Molybdändioxidtetramethylheptadionat, Natriumwolframat, Kaliumtellurit K₂TeO₃, Lithiumorthovanadat, Lithiummetavanadat, Natriumorthovanadat, Natriummetavanadat sowie Ammoniumheptamolybdat eingesetzt werden.

9. Wässrige Zusammensetzung nach Anspruch 8, **dadurch gekennzeichnet, dass** als Komponente (c) Lithiummolybdat eingesetzt wird.

10. Verwendung von wässrigen Zusammensetzungen nach einem oder mehreren der Ansprüche 1 bis 9 zur Herstellung von Klebstoffsystemen.

11. Verfahren zur Herstellung von wässrigen Zusammensetzungen nach einem oder mehreren der Ansprüche 1 bis 9, **dadurch gekennzeichnet, dass** die Komponente c) bei der Herstellung der Komponenten a) oder b) in die jeweilige Komponente eingebracht wird

12. Klebstoffsysteme enthaltend eine wässrige Zusammensetzung nach einem oder mehreren der Ansprüche 1 bis 9.

13. Verwendung von Klebstoffsystemen nach Anspruch 12 zur Verklebung von Materialien ausgewählt aus der Gruppe bestehend aus Leder, Ethylvinylacetat, Gummi, Polyurethan, Polyamid und Polyetherpolyamid.

14. Verwendung von Klebstoffsystemen nach Anspruch 12 zur Verklebung von Materialien ausgewählt aus der Gruppe bestehend aus Papier, Pappe, Holz, Holzfaserplatten und Polyvinylchlorid

15. Substrate, die mit einem Klebstoffsystem nach Anspruch 12 verklebt wurden.
